# EUROPEAN PATENT APPLICATION

(11) **EP 4 387 214 A1**
(43) Date of publication of application: **19.06.2024**
(21) Application number: 22863080.2
(22) Date of filing: 11.08.2022
(51) Int. Cl.: H04M 1/725, G06F 3/0488

(54) **TOUCH SCREEN CONTROL METHOD AND RELATED DEVICE**

(30) Priority: 31.08.2021 CN 202111013349
(71) Applicant: Huawei Technologies Co., Ltd., Shenzhen, Guangdong 518129 (CN)
(72) Inventor: LI, Ming, Shenzhen, Guangdong 518129 (CN); BI, Yang, Shenzhen, Guangdong 518129 (CN); WANG, Lin, Shenzhen, Guangdong 518129 (CN)
(74) Representative: Huawei European IPR
(86) International application number: PCT/CN2022/111899
(87) International publication number: WO 2023/029940

(57) **Abstract**

This application provides a touch panel control method and a related device, applied to an electronic device. The method includes: detecting whether a panel protective case of the electronic device is closed; and controlling a touch panel of the electronic device to enter a power-off mode in response to detecting that the panel protective case is closed, where when it is detected that the panel protective case of the electronic device is closed, a gesture wake-up function of the electronic device has been enabled. According to the method, power consumption of the electronic device can be reduced, and use duration of the electronic device can be prolonged.

## Description

This application claims priority to Chinese Patent Application No. 202111013349.5, filed with the China National Intellectual Property Administration on August 31, 2021 and entitled "TOUCH PANEL CONTROL METHOD AND RELATED DEVICE", which is incorporated herein by reference in its entirety.

### TECHNICAL FIELD

This application relates to the field of terminal technologies, and in particular, to a touch panel control method and a related device.

### BACKGROUND

A terminal device with a touch panel is already quite popular. A plurality of terminal devices not only can be touched by using a finger, but also can be touched by a stylus, and the touch panel has more and more operating modes. For example, in a normal screen-on state, the terminal device may support only a finger touch, or support both a finger touch and a stylus touch. In a standby sleep state, the terminal device enters a low power consumption mode, and may support a gesture wake-up function of a finger, or support gesture wake-up functions of both a finger and a stylus. However, currently, the touch panel can be controlled only by enabling and disabling a stylus function and a gesture wake-up function. This control manner is likely to cause high power consumption of the terminal device. For example, after the stylus function and the gesture wake-up function of the terminal device are enabled, in a screen-on state, the touch panel of the terminal device keeps performing stylus scanning and code marking; and in a standby sleep state, the touch panel also keeps performing the stylus scanning and code marking. A user may not use the stylus in most of the time. Continuous stylus signal scanning and code marking increase power consumption of the terminal device, and reduce use duration of the electronic device.

### SUMMARY

Embodiments of this application provide a touch panel control method and a related device, to reduce power consumption of an electronic device and prolong use duration of the electronic device.

A first aspect of this application discloses a touch panel control method, applied to an electronic device, where the method includes: detecting whether a panel protective case of the electronic device is closed; and controlling a touch panel of the electronic device to enter a power-off mode in response to detecting that the panel protective case is closed, where when it is detected that the panel protective case of the electronic device is closed, a gesture wake-up function of the electronic device has been enabled.

According to the touch panel control method provided in this embodiment of this application, the electronic device can power off the touch panel based on an actual use scenario in which the panel protective case of the electronic device is closed and the gesture wake-up function has been enabled. This reduces power consumption of the electronic device and prolongs use duration of the electronic device.

In some optional implementations, before the controlling a touch panel to enter a power-off mode, the method further includes: disabling the gesture wake-up function in response to detecting that the panel protective case is closed.

In some optional implementations, after the controlling a touch panel to enter a power-off mode, the method further includes: if it is detected that the panel protective case is opened and it is determined that the touch panel disables the gesture wake-up function before entering the power-off mode, powering on the touch panel and enabling the gesture wake-up function.

In some optional implementations, the method further includes: obtaining stylus status information of the electronic device; and controlling stylus scanning and code marking of the touch panel based on the stylus status information.

According to the touch panel control method provided in this embodiment of this application, the electronic device can control the stylus scanning and code marking based on the stylus status information with reference to the actual use scenario. This reduces the power consumption of the electronic device and prolongs the use duration of the electronic device.

In some optional implementations, the stylus status information includes any one or more of the following: connection status information between the stylus and the electronic device, attachment status information of the stylus, signal strength information between the stylus and the electronic device, and motion status information of the stylus.

In some optional implementations, the controlling stylus scanning and code marking of the touch panel based on the stylus status information includes: performing first control on the stylus scanning and code marking of the touch panel if it is determined, based on the connection status information between the stylus and the electronic device, that the stylus does not establish a communication connection to the electronic device, if it is determined, based on the attachment status information of the stylus, that the stylus is attached to the electronic device, if it is determined, based on the signal strength information between the stylus and the electronic device, that a signal strength between the stylus and the electronic device is less than a preset threshold, or if it is determined, based on the motion status information of the stylus, that the stylus is still.

In some optional implementations, the controlling stylus scanning and code marking of the touch panel based on the stylus status information includes: performing second control on the stylus scanning and code marking if at least two conditions are met: if it is determined, based on the connection status information between the stylus and the electronic device, that the stylus establishes a communication connection to the electronic device, if it is determined, based on the attachment status information of the stylus, that the stylus is not attached to the electronic device, if it is determined, based on the signal strength information between the stylus and the electronic device, that a signal strength between the stylus and the electronic device is greater than or equal to a preset threshold, and if it is determined, based on the motion status information of the stylus, that the stylus is not still.

According to the touch panel control method provided in this embodiment of this application, a finger touch failure caused by entering a pen mode by mistake due to external interference can be avoided.

In some optional implementations, the performing first control on the stylus scanning and code marking of the touch panel includes: disabling the stylus scanning and code marking; reducing a voltage amplitude of the stylus scanning and code marking; or reducing a scanning frame rate of the stylus scanning and code marking.

In some optional implementations, the performing second control on the stylus scanning and code marking includes: enabling the stylus scanning and code marking; increasing a voltage amplitude of the stylus scanning and code marking; or increasing a scanning frame rate of the stylus scanning and code marking.

A second aspect of this application discloses a touch panel control method, applied to an electronic device, where the method includes: obtaining stylus status information of the electronic device; and controlling stylus scanning and code marking of a touch panel of the electronic device based on the stylus status information.

In some optional implementations, the stylus status information includes any one or more of the following: connection status information between the stylus and the electronic device, attachment status information of the stylus, signal strength information between the stylus and the electronic device, and motion status information of the stylus.

In some optional implementations, the controlling stylus scanning and code marking of a touch panel based on the stylus status information includes: performing first control on the stylus scanning and code marking of the touch panel if it is determined, based on the connection status information between the stylus and the electronic device, that the stylus does not establish a communication connection to the electronic device, if it is determined, based on the attachment status information of the stylus, that the stylus is attached to the electronic device, if it is determined, based on the signal strength information between the stylus and the electronic device, that a signal strength between the stylus and the electronic device is less than a preset threshold, or if it is determined, based on the motion status information of the stylus, that the stylus is still.

In some optional implementations, the controlling stylus scanning and code marking of a touch panel based on the stylus status information includes: performing second control on the stylus scanning and code marking if at least two conditions are met: if it is determined, based on the connection status information between the stylus and the electronic device, that the stylus establishes a communication connection to the electronic device, if it is determined, based on the attachment status information of the stylus, that the stylus is not attached to the electronic device, if it is determined, based on the signal strength information between the stylus and the electronic device, that a signal strength between the stylus and the electronic device is greater than or equal to a preset threshold, and if it is determined, based on the motion status information of the stylus, that the stylus is not still.

In some optional implementations, the performing first control on the stylus scanning and code marking of the touch panel includes: disabling the stylus scanning and code marking; reducing a voltage amplitude of the stylus scanning and code marking; or reducing a scanning frame rate of the stylus scanning and code marking.

In some optional implementations, the performing second control on the stylus scanning and code marking includes: enabling the stylus scanning and code marking; increasing a voltage amplitude of the stylus scanning and code marking; or increasing a scanning frame rate of the stylus scanning and code marking.

A third aspect of this application discloses a computer-readable storage medium, including computer instructions, where when the computer instructions are run on an electronic device, the electronic device is enabled to perform the touch panel control method according to the first aspect or the second aspect.

A fourth aspect of this application discloses an electronic device, where the electronic device includes a processor and a memory, the memory is configured to store instructions, and the processor is configured to invoke the instructions in the memory, to enable the electronic device to perform the touch panel control method according to the first aspect or the second aspect.

A fifth aspect of this application discloses a chip system, where the chip system is used in an electronic device; the chip system includes an interface circuit and a processor; the interface circuit and the processor are interconnected by using a line; the interface circuit is configured to: receive a signal from a memory of the electronic device, and send the signal to the processor; the signal includes computer instructions stored in the memory; and when the processor executes the computer instructions, the chip system performs the touch panel control method according to the first aspect or the second aspect.

It should be understood that the computer-readable storage medium provided in the third aspect, the electronic device in the fourth aspect, and the chip system in the fifth aspect all correspond to the methods in the first aspect and the second aspect. Therefore, for beneficial effects that can be achieved by the computer-readable storage medium, the electronic device, and the chip system, refer to beneficial effects in the corresponding methods provided above. Details are not described herein again.

### BRIEF DESCRIPTION OF DRAWINGS

FIG. 1 is a schematic diagram of an application scenario of a touch panel control method according to an embodiment of this application;
FIG. 2 is an architectural diagram of an electronic device and a stylus according to an embodiment of this application;
FIG. 3A and FIG. 3B are a flowchart of a touch panel control method according to an embodiment of this application;
FIG. 4 is a flowchart of a touch panel control method according to another embodiment of this application;
FIG. 5 is a flowchart of a touch panel control method according to another embodiment of this application; and
FIG. 6 is a schematic diagram of a structure of an electronic device according to an embodiment of this application.

### DESCRIPTION OF EMBODIMENTS

For ease of understanding, descriptions of some concepts related to embodiments of this application are provided as examples for reference, as shown in the following.

It should be noted that "at least one" means one or a plurality of and "a plurality of" means two or more in this application. "And/or" describes an association relationship between associated objects, and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and so on (if existent) are intended to distinguish between similar objects but do not necessarily indicate a specific order or sequence.

To better understand a touch panel control method and a related device provided in embodiments of this application, the following first describes an application scenario of the touch panel control method in this application.

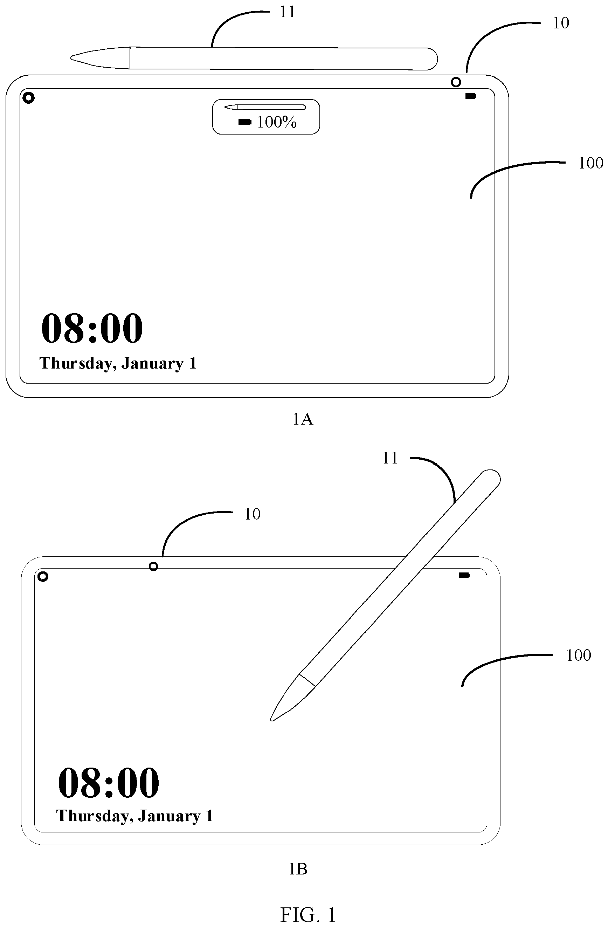

FIG. 1 is a schematic diagram of an application scenario of a touch panel control method according to an embodiment of this application.

As shown in FIG. 1, an electronic device 10 (a tablet shown in the figure) includes a touch panel (touch panel, TP) 100, and the electronic device 10 is communicatively connected to a stylus 11. The stylus 11 includes a magnet (not shown in the figure), and the stylus 11 may be attached to the electronic device 10. The stylus 11 is configured to perform an operation on the touch panel 100, for example, selecting a menu or an option, opening a file, starting an application, drawing, or writing. 1A shows a state in which the stylus 11 is attached to the electronic device 10, and 1B shows a state in which the stylus 11 operates on the touch panel 100.

In an embodiment of this application, the electronic device 10 may be a mobile phone or a tablet. The electronic device 10 may be equipped with a panel protective case (that is, a leather case, which is not shown in the figure), and is configured to protect the touch panel 100 of the electronic device 10. The panel protective case may be closed/covered (that is, cover the touch panel 100) or opened/uncovered (that is, uncovered from the touch panel 100). When the panel protective case is closed, the electronic device 10 turns off a screen. When the panel protective case is opened, the electronic device 10 turns on the screen. The panel protective case may include a magnet. The panel protective case may be a leather case or a polyurethane (Polyurethane, PU) case.

In another embodiment of this application, the electronic device 10 may be another touch device, for example, a notebook computer including a touch panel. The electronic device 10 may not include the panel protective case.

In this embodiment of this application, the touch panel 100 is a capacitive touch panel, and the stylus 11 is a capacitive stylus. The touch panel 100 may generate a finger scanning and code marking signal for a finger, and is configured to perform scanning and code marking on the finger (that is, finger scanning and code marking), to identify a touch point location of the finger. The touch panel 100 may generate a stylus scanning and code marking signal for the stylus 11, and is configured to perform scanning and code marking on the stylus 11 (that is, stylus scanning and code marking), to identify a touch point location of the stylus. In a standby sleep state, a scanning frame rate at which the touch panel 100 is used to support finger/stylus gesture wake-up is lower than a scanning frame rate at which the touch panel 100 is used to support a finger/stylus touch in a screen-on state. For example, in the screen-on state, a scanning frame rate at which the touch panel 100 performs the finger scanning and code marking is 120 Hz; in the standby sleep state, a scanning frame rate at which the touch panel 100 performs the finger scanning and code marking is 12 Hz; in the screen-on state, a scanning frame rate at which the touch panel 100 performs the stylus scanning and code marking is 240 Hz; and in the standby sleep state, a scanning frame rate at which the touch panel 100 performs the stylus scanning and code marking is 24 Hz.

Currently, the electronic device 10 can control the touch panel 100 only by enabling and disabling a stylus function and a gesture wake-up function. For example, if the stylus function and the gesture wake-up function are not enabled, in the screen-on state, the touch panel 100 supports a finger touch, but does not support a stylus touch. In the standby sleep state, the touch panel 100 does not support gesture wake-up (that is, supports neither the finger gesture wake-up nor the stylus gesture wake-up). If the stylus function is enabled and the gesture wake-up function is disabled, in the screen-on state, the touch panel 100 supports the finger touch and the stylus touch. In the standby sleep state, the touch panel 100 does not support the gesture wake-up. If the stylus function is disabled and the gesture wake-up function is enabled, in the screen-on state, the touch panel 100 supports the finger touch, but does not support the stylus touch. In the standby sleep state, the touch panel 100 supports the finger gesture wake-up, but does not support the stylus gesture wake-up. If the stylus function and the stylus function are enabled, in the screen-on state, the touch panel 100 supports the finger touch and the stylus touch. In the standby sleep state, the touch panel 100 supports the finger gesture wake-up and the stylus gesture wake-up.

A current touch panel control manner is likely to cause high power consumption of the electronic device 10. For example, after the stylus function and the gesture wake-up function of the electronic device 10 are enabled, in the screen-on state, the touch panel 100 may keep performing the stylus scanning and code marking, and in the standby sleep state, the touch panel 100 may also keep performing the stylus scanning and code marking. A user may not use the stylus in most of the time. Continuous stylus signal scanning and code marking on the touch panel 100 increase power consumption of the electronic device 10, and reduce use duration of the electronic device 10.

In addition, according to the current touch panel control manner, when the screen is on, even if there is no stylus 11, the electronic device 10 may enter a pen mode by mistake when encountering external interference, and consequently a finger touch failure (a case in which the finger touch is disabled in the pen mode) is caused.

According to the touch panel control method provided in this embodiment of this application, the electronic device 10 can control the touch panel 100 based on opening and closing information of the panel protective case of the electronic device 10 and/or status information of the stylus 11 (which may include connection status information between the stylus 11 and the electronic device 10, attachment status information of the stylus 11, signal strength information between the stylus 11 and the electronic device 10, and motion status information of the stylus 11) based on an actual use scenario, to reduce power consumption of the electronic device 10 and prolong use duration of the electronic device 10. According to the touch panel control method provided in this embodiment of this application, the finger touch failure caused by entering the pen mode by mistake due to the external interference can be further avoided.

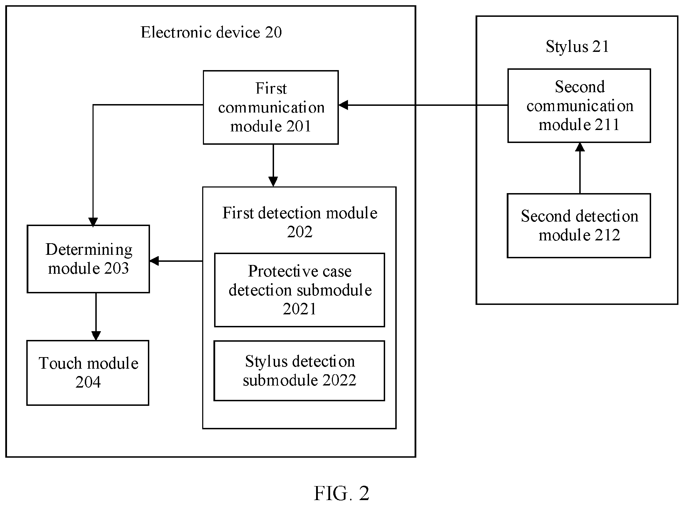

FIG. 2 is an architectural diagram of an electronic device and a stylus according to an embodiment of this application. This embodiment is described by using an electronic device (for example, a mobile phone or a tablet) equipped with a panel protective case as an example.

As shown in FIG. 2, an electronic device 20 may include a first communication module 201, a first detection module 202, a determining module 203, and a touch module (that is, a touch panel) 204. A stylus 21 may include a second communication module 211 and a second detection module 212.

In an embodiment of this application, Bluetooth communication is performed between the electronic device 20 and the stylus 21, and the first communication module 201 and the second communication module 211 are Bluetooth modules.

In another embodiment of this application, another type of short-distance wireless communication may be performed between the electronic device 20 and the stylus 21. For example, short-distance wireless communication may be performed between the electronic device 20 and the stylus 21 in a manner such as Wi-Fi, near field communication (Near Field Communication, NFC), a ZigBee technology, an infrared data association (Infrared Data Association, IrDA) technology, an ultra-wideband (ultra-wideband, UWB) technology, or a wireless universal serial bus (Universal Serial Bus, USB).

The first communication module 201 is configured to communicate with the second communication module 211, to implement information exchange between the electronic device 20 and the stylus 21. In this embodiment of this application, the electronic device 20 receives, by using the first communication module 201, motion status information of the stylus 21 that is sent by the stylus 21 by using the second communication module 211.

The first communication module 201 may provide connection status information (for example, Bluetooth connection information) between the stylus 21 and the electronic device 20, and signal strength information (for example, Bluetooth signal strength information) between the stylus 21 and the electronic device 20.

The first detection module 202 is configured to detect opening and closing of a panel protective case (that is, detect opening of the panel protective case and closing of the panel protective case), to obtain opening and closing information of the panel protective case. The first detection module 202 is further configured to detect an attachment status of the stylus 21 (that is, detect whether the stylus 21 is attached to the electronic device 20), to obtain attachment status information of the stylus 21. In this embodiment, the first detection module 202 includes a protective case detection submodule 2021 and a stylus detection submodule 2022. The protective case detection submodule 2021 is configured to detect the opening and closing of the panel protective case, and the stylus detection submodule 2022 is configured to detect the attachment status of the stylus 21.

In an embodiment of this application, when the panel protective case is closed/covered, the protective case detection submodule 2021 generates a first interrupt signal; and when the panel protective case is opened, the protective case detection submodule 2021 generates a second interrupt signal. The determining module 203 may determine, based on the first interrupt signal and the second interrupt signal, whether the panel protective case is closed or opened. If the first interrupt signal is detected, the panel protective case is closed; or if the second interrupt signal is detected, the panel protective case is opened. If the first interrupt signal is not detected after the second interrupt signal is detected, the panel protective case is in an open state (that is, not closed). If the second interrupt signal is not detected after the first interrupt signal is detected, the panel protective case is in a closed state (that is, not opened).

In an embodiment of this application, when the stylus 21 is attached to the electronic device 20, the stylus detection submodule 2022 generates a third interrupt signal; and when the stylus 21 is removed from the electronic device 20, the stylus detection submodule 2022 generates a fourth interrupt signal. The determining module 203 may determine, based on the third interrupt signal and the fourth interrupt signal, whether the stylus 21 is attached to the electronic device 20 and whether the stylus 21 is removed from the electronic device 20. If the third interrupt signal is detected, the stylus 21 is attached to the electronic device 20; or if the fourth interrupt signal is detected, the stylus 21 is removed from the electronic device 20.

In an embodiment of this application, the first detection module 202 includes a magnetic sensor (for example, a Hall effect sensor), and the first detection module 202 detects the opening and closing of the panel protective case and the attachment status of the stylus 21 by using the magnetic sensor. For example, the stylus detection submodule 2022 includes a first magnetic sensor, and the stylus detection submodule 2022 detects the opening and closing of the panel protective case by using the first magnetic sensor. The protective case detection submodule 2021 includes a second magnetic sensor, and the protective case detection submodule 2021 detects the attachment status of the stylus 21 by using the second magnetic sensor. It should be understood that the first detection module 202 may detect the opening and closing of the panel protective case and the attachment status of the stylus 21 in another manner. For example, the first detection module 202 may include a distance sensor (for example, a first distance sensor and a second distance sensor), and the first detection module 202 detects the opening and closing of the panel protective case and the attachment status of the stylus 21 by using the distance sensor. For example, the first detection module 202 detects the attachment status of the stylus 21 by using the first distance sensor, and detects the opening and closing of the panel protective case by using the second distance sensor.

The determining module 203 is configured to determine a control manner of the touch panel (that is, the touch module 204) based on the opening and closing information of the panel protective case of the electronic device 20 and status information of the stylus 21.

In an embodiment of this application, the status information (that is, stylus status information) of the stylus 21 includes the connection status information between the stylus 21 and the electronic device 20, the attachment status information of the stylus 21, the signal strength information between the stylus 21 and the electronic device 20, and the motion status information of the stylus 21. If it is determined, based on the opening and closing information of the panel protective case, that the panel protective case is closed (that is, it is detected that the panel protective case of the electronic device 20 is closed), it is determined to control the touch panel to enter a power-off mode. When it is detected that the panel protective case of the electronic device 20 is closed, a gesture wake-up function of the electronic device 20 has been enabled. If it is detected that the panel protective case of the electronic device 20 is not closed, the electronic device 20 enters a standby sleep state, and the gesture wake-up function has been enabled, it is determined to control the touch panel to enter a low power consumption gesture wake-up mode. If the electronic device 20 enters the standby sleep state and the gesture wake-up function is disabled, it is determined to control the touch panel to enter the power-off mode. It is determined to perform first control on stylus scanning and code marking of the touch panel if it is determined, based on the connection status information between the stylus 21 and the electronic device 20, that the stylus 21 does not establish a communication connection to the electronic device 20, or it is determined, based on the attachment status information of the stylus 21, that the stylus 21 is attached to the electronic device 20, or it is determined, based on the signal strength information between the stylus 21 and the electronic device 20, that a signal strength between the stylus 21 and the electronic device 20 is less than a preset threshold, or it is determined, based on the motion status information of the stylus 21, that the stylus 21 is still. It is determined to perform second control on the stylus scanning and code marking of the touch panel if it is determined, based on the connection status information between the stylus 21 and the electronic device 20, that the stylus 21 establishes a communication connection to the electronic device 20, it is determined, based on the attachment status information of the stylus 21, that the stylus 21 is not attached to the electronic device 20, it is determined, based on the signal strength information between the stylus 21 and the electronic device 20, that a signal strength between the stylus 21 and the electronic device 20 is greater than or equal to a preset threshold, and it is determined, based on the motion status information of the stylus 21, that the stylus 21 is not still.

In an embodiment of this application, the performing first control on stylus scanning and code marking of the touch panel may be disabling the stylus scanning and code marking, reducing a voltage amplitude of the stylus scanning and code marking, or reducing a scanning frame rate of the stylus scanning and code marking. The performing second control on the stylus scanning and code marking of the touch panel may be enabling the stylus scanning and code marking, increasing a voltage amplitude of the stylus scanning and code marking, or increasing a scanning frame rate of the stylus scanning and code marking.

In another embodiment of this application, the determining module 203 may adjust the control manner of the touch panel as required. For example, the control manner of the touch panel may be determined based on more or less information. In an embodiment, the electronic device 20 is not equipped with a panel protective case, and the determining module 203 determines the control manner of the touch panel of the electronic device 20 based on the status information of the stylus 21 (the control manner of the touch panel of the electronic device 20 does not need to be determined based on the opening and closing of the panel protective case of the electronic device 20).

For another example, in another embodiment, the status information of the stylus 21 includes the connection status information between the stylus 21 and the electronic device 20, and the attachment status information of the stylus 21. The determining module 203 determines the control manner of the touch panel of the electronic device 20 based on the opening and closing information of the panel protective case of the electronic device 20, the connection status information between the stylus 21 and the electronic device 20, and the attachment status information of the stylus 21. If it is determined, based on the opening and closing information of the panel protective case, that the panel protective case is closed (that is, it is detected that the panel protective case of the electronic device 20 is closed), it is determined to control the touch panel to enter a power-off mode. When it is detected that the panel protective case of the electronic device 20 is closed, the gesture wake-up function of the electronic device 20 has been enabled. If it is determined, based on the opening and closing information of the panel protective case that the panel protective case is not closed, the electronic device 20 enters a standby sleep state, and the gesture wake-up function has been enabled, it is determined to control the touch panel to enter the low power consumption gesture wake-up mode. If the electronic device 20 enters the standby sleep state and the gesture wake-up function is disabled, it is determined to control the touch panel to enter the power-off mode. It is determined to perform the first control on the stylus scanning and code marking of the touch panel if it is determined, based on the connection status information between the stylus 21 and the electronic device 20, that the stylus 21 does not establish a communication connection to the electronic device 20, or it is determined, based on the attachment status information of the stylus 21, that the stylus 21 is attached to the electronic device 20. It is determined to perform the second control on the stylus scanning and code marking of the touch panel if it is determined, based on the connection status information between the stylus 21 and the electronic device 20, that the stylus 21 establishes a communication connection to the electronic device 20, and it is determined, based on the attachment status information of the stylus 21, that the stylus 21 is not attached to the electronic device 20.

In a case in which the stylus scanning and code marking are controlled based on the connection status information between the stylus 21 and the electronic device 20, the attachment status information of the stylus 21, the signal strength information between the stylus 21 and the electronic device 20, and the motion status information of the stylus 21, it may be determined to perform the second control on the stylus scanning and code marking of the touch panel when at least two conditions are met: it is determined, based on the connection status information between the stylus 21 and the electronic device 20, that the stylus 21 establishes a communication connection to the electronic device 20, it is determined, based on the attachment status information of the stylus 21, that the stylus 21 is not attached to the electronic device 20, it is determined, based on the signal strength information between the stylus 21 and the electronic device 20, that a signal strength between the stylus 21 and the electronic device 20 is greater than or equal to a preset threshold, and it is determined, based on the motion status information of the stylus 21, that the stylus 21 is not still.

The touch module 204 is configured to work in the control manner determined by the determining module 203. The touch module 204 may support a plurality of operating modes. In this embodiment of this application, the touch module 204 supports the power-off mode and the low power consumption gesture wake-up mode, and supports dynamic enabling and disabling of the stylus scanning and code marking.

For example, if the determining module 203 determines to control the touch panel to enter the power-off mode, the touch module 204 is directly powered off. After the touch module 204 is powered off, the touch panel no longer works, and the power consumption of the electronic device 20 can be reduced.

For another example, if the determining module 203 determines to control the touch panel to enter the low power consumption gesture wake-up mode, the touch module 204 enters the low power consumption gesture wake-up mode. After the touch module 204 enters the low power consumption gesture wake-up mode, the touch panel reduces the scanning frame rate, and the power consumption of the electronic device 20 can be reduced.

For another example, if the determining module 203 determines to perform the first control (for example, disabling the stylus scanning and code marking, reducing the voltage amplitude of the stylus scanning and code marking, or reducing the scanning frame rate of the stylus scanning and code marking) on the stylus scanning and code marking of the touch panel, the touch module 204 performs the first control on the stylus scanning and code marking of the touch panel. The performing the first control on the stylus scanning and code marking of the touch panel is to reduce the power consumption of the touch panel. It should be noted that, in the touch panel control method provided in this embodiment of this application, not only control of the stylus scanning and code marking (that is, the first control and the second control) is performed on the touch panel when the screen is on, but also the control of the stylus scanning and code marking is performed on the touch panel when the touch panel is in a low power consumption gesture wake-up mode. This further reduces the power consumption of the electronic device 20.

In an embodiment of this application, when the panel protective case of the electronic device 20 is closed, if the gesture wake-up function of the electronic device 20 has been enabled, the gesture wake-up function of the electronic device 20 is disabled before the touch panel is controlled to enter the power-off mode. If the panel protective case changes from being closed to being opened, the gesture wake-up function of the electronic device 20 is enabled.

The second communication module 211 is configured to communicate with the first communication module 201, to implement information exchange between the stylus 21 and the electronic device 20.

The second detection module 212 is configured to detect a motion status of the stylus 21, to obtain the motion status information of the stylus 21. In an embodiment of this application, the stylus 21 includes a motion sensor (for example, an acceleration sensor), and the second detection module 212 detects the motion status of the stylus 21 by using the motion sensor, to obtain the motion status information of the stylus 21. The second detection module 212 sends the motion status information of the stylus 21 to the electronic device 20 by using the second communication module 211.

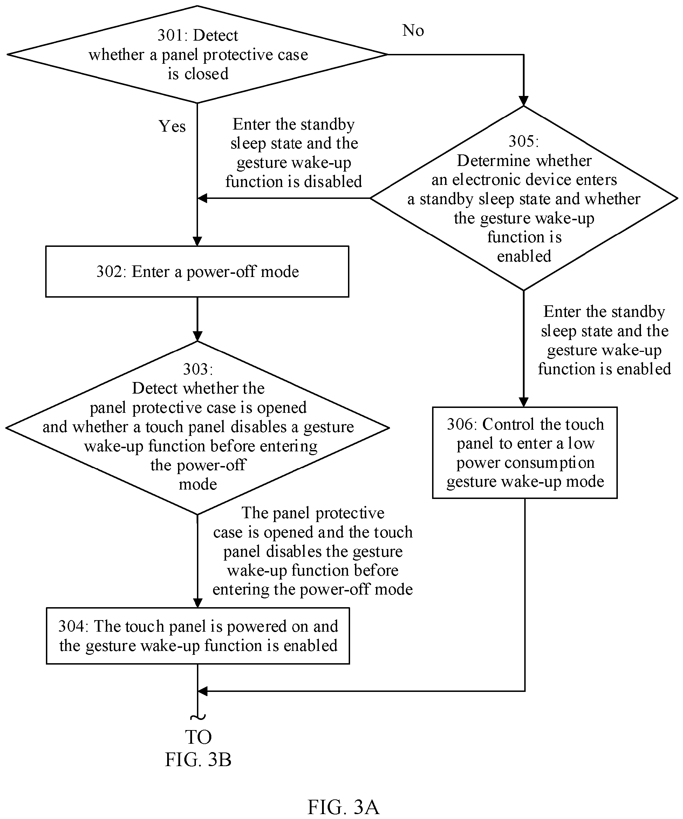

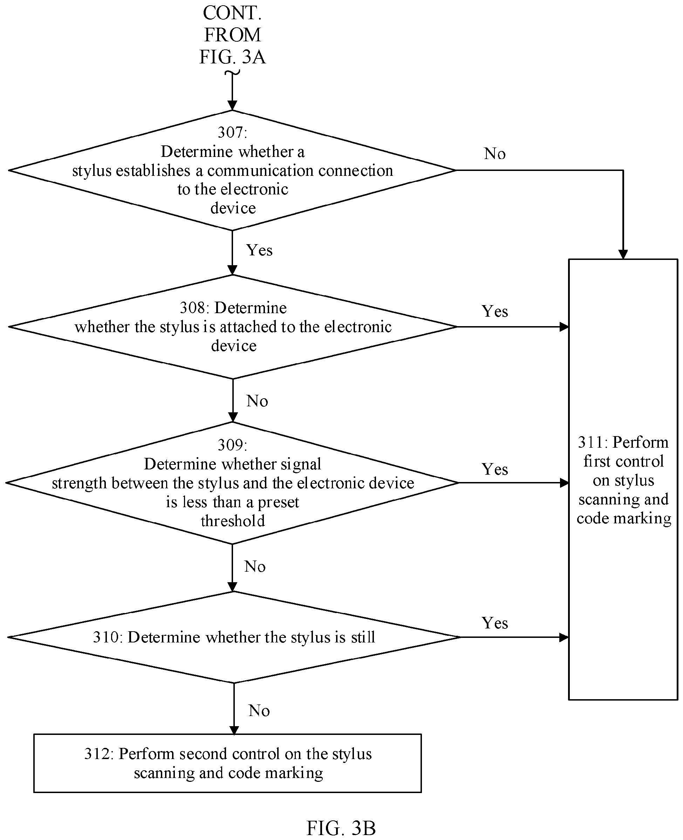

FIG. 3A and FIG. 3B is a flowchart of a touch panel control method according to an embodiment of this application. The touch panel control method provided in this embodiment of this application is applied to an electronic device (for example, the electronic device 10 in FIG. 1). This embodiment is described by using an electronic device (for example, a mobile phone or a tablet) equipped with a panel protective case as an example.

As shown in FIG. 3A and FIG. 3B, the touch panel control method provided in this embodiment of this application specifically includes the following steps.

301: The electronic device detects whether the panel protective case is closed.

In an embodiment of this application, as shown in FIG. 2, the electronic device may detect opening and closing of the panel protective case by using a first detection module (for example, a protective case detection submodule of the first detection module).

In an embodiment of this application, when the panel protective case is closed, the first detection module generates a first interrupt signal. The electronic device may detect the first interrupt signal of the first detection module, and if the first interrupt signal is detected, it is determined that the panel protective case is closed. If the first interrupt signal is not detected, it is determined that the panel protective case is not closed.

302: If it is detected that the panel protective case of the electronic device is closed, the electronic device controls a touch panel to enter a power-off mode. When it is detected that the panel protective case of the electronic device is closed, a gesture wake-up function of the electronic device has been enabled.

When the panel protective case of the electronic device is closed, the electronic device turns off a screen. According to the touch panel control method provided in this embodiment of this application, the touch panel of the electronic device is directly powered off when the panel protective case is closed. After being powered off, the touch panel no longer works, and power consumption of the electronic device is reduced.

In an embodiment of this application, when the panel protective case of the electronic device is closed, if the gesture wake-up function of the electronic device has been enabled, the gesture wake-up function of the electronic device is disabled when the touch panel of the electronic device is controlled to be powered off.

303: The electronic device detects whether the panel protective case is opened and whether the touch panel disables the gesture wake-up function before entering the power-off mode.

In an embodiment of this application, when the panel protective case is opened, the first detection module (as shown in FIG. 2) generates a second interrupt signal. The electronic device may detect the second interrupt signal of the first detection module, and if the second interrupt signal generated by the first detection module is detected, it is determined that the panel protective case is opened.

304: If the panel protective case is opened and the touch panel disables the gesture wake-up function of the electronic device before entering the power-off mode, the touch panel is powered on and the gesture wake-up function is enabled.

If the gesture wake-up function of the electronic device is disabled before the electronic touch panel is controlled to enter the power-off mode, after the panel protective case is opened, the electronic device turns on a screen to work, and the gesture wake-up function of the electronic device is enabled.

If the gesture wake-up function of the electronic device is not disabled before the electronic touch panel is controlled to enter the power-off mode, the electronic device turns on the screen (the touch panel is powered on).

305: If the panel protective case of the electronic device is not closed, determine whether the electronic device enters a standby sleep state and whether the gesture wake-up function has been enabled.

If the electronic device enters the standby sleep state and the gesture wake-up function is disabled, the process turns to 302, and the touch panel is controlled to enter the power-off mode.

The electronic device may enter the standby sleep state after a user presses a preset button (for example, pressing a power button) of the electronic device. Alternatively, the electronic device may enter the standby sleep state when the electronic device is inactive for a preset time (for example, the user does not perform an operation on the mobile phone within the preset time). In the standby sleep state, the electronic device turns off the screen.

306: If the electronic device enters the standby sleep state and the gesture wake-up function has been enabled, control the touch panel of the electronic device to enter a low power consumption gesture wake-up mode.

Before the touch panel enters the low power consumption gesture wake-up mode, if the touch panel enables stylus scanning and code marking, the touch panel supports both finger gesture wake-up and stylus gesture wake-up after entering the low power consumption gesture wake-up mode. Before the touch panel enters the low power consumption gesture wake-up mode, if the touch panel disables the stylus scanning and code marking, the touch panel supports the finger gesture wake-up but does not support the stylus gesture wake-up after entering the low power consumption gesture wake-up mode.

According to the touch panel control method provided in this embodiment of this application, when the electronic device does not close the panel protective case, enters the standby sleep state, and enables the gesture wake-up function, the touch panel of the electronic device is controlled to enter the low power consumption gesture wake-up mode, to reduce the power consumption of the electronic device.

307: The electronic device obtains connection status information between a stylus and the electronic device, and determines, based on the connection status information between the stylus and the electronic device, whether the stylus establishes a communication connection to the electronic device.

In an embodiment of this application, as shown in FIG. 2, the electronic device may obtain the connection status information between the stylus and the electronic device from a first communication module. For example, Bluetooth communication is performed between the stylus and the electronic device, and the electronic device obtains Bluetooth connection status information between the stylus and the electronic device from the first communication module.

In another embodiment of this application, another type of short-distance wireless communication (for example, NFC communication or IrDA communication) may be performed between the electronic device and the stylus. The electronic device may obtain corresponding connection status information between the stylus and the electronic device.

308: If the stylus does not establish a communication connection to the electronic device, the electronic device obtains attachment status information of the stylus, and determines, based on the attachment status information of the stylus, whether the stylus is attached to the electronic device.

In an embodiment of this application, as shown in FIG. 2, the electronic device detects an attachment status of the stylus by using the first detection module (for example, a stylus detection submodule of the first detection module) (that is, detects whether the stylus is attached to the electronic device), to obtain the attachment status information of the stylus.

In an embodiment of this application, when the stylus is attached to the electronic device, the first detection module generates a third interrupt signal; and when the stylus is removed from the electronic device, the first detection module generates a fourth interrupt signal. The electronic device may determine the attachment status of the stylus based on the third interrupt signal and the fourth interrupt signal. If the third interrupt signal is detected, it is determined that the stylus is attached to the electronic device, or if the fourth interrupt signal is detected, it is determined that the stylus is removed from the electronic device.

In an embodiment of this application, the electronic device may include a magnetic sensor (for example, a Hall effect sensor), and the electronic device detects the attachment status of the stylus by using the magnetic sensor.

In an embodiment of this application, the electronic device may detect the attachment status of the stylus in another manner. For example, the electronic device may include a distance sensor, and the electronic device detects the attachment status of the stylus by using the distance sensor.

309: If the stylus is not attached to the electronic device, the electronic device obtains signal strength information between the stylus and the electronic device, and determines, based on the signal strength information between the stylus and the electronic device, whether signal strength between the stylus and the electronic device is less than a preset threshold.

In an embodiment of this application, as shown in FIG. 2, the electronic device may obtain the signal strength information of the stylus and the electronic device from the first communication module. For example, the first communication module is a Bluetooth module, and the electronic device may obtain Bluetooth signal strength information between the stylus and the electronic device from the first communication module.

The signal strength between the stylus and the electronic device may identify a distance between the stylus and the electronic device. A larger signal strength between the stylus and the electronic device indicates a shorter distance between the stylus and the electronic device. A smaller signal strength between the stylus and the electronic device indicates a longer distance between the stylus and the electronic device.

310: If the signal strength between the stylus and the electronic device is greater than or equal to the preset threshold, the electronic device obtains motion status information of the stylus, and determines, based on the motion status information of the stylus, whether the stylus is still.

In an embodiment of this application, as shown in FIG. 2, the stylus includes a second detection module, configured to detect a motion status of the stylus to obtain the motion status information of the stylus. The second detection module may include a motion sensor, and the motion status of the stylus is detected by using the motion sensor, to obtain the motion status information of the stylus. The second detection module sends the motion status information of the stylus to the electronic device by using a second communication module.

311: If the stylus does not establish the communication connection to the electronic device, or the stylus is attached to the electronic device, or the signal strength between the stylus and the electronic device is less than the preset threshold, or the stylus is still, the electronic device performs first control on the stylus scanning and code marking of the touch panel.

The first control is an operation of reducing the power consumption of the touch panel.

In an embodiment of this application, the performing first control on the stylus scanning and code marking of the touch panel includes: disabling the stylus scanning and code marking; or reducing a voltage amplitude of the stylus scanning and code marking.

When the stylus does not establish a communication connection to the electronic device, or the stylus is attached to the electronic device, or the signal strength between the stylus and the electronic device is less than the preset threshold, or the stylus is still, it may be determined that the user does not use the stylus, and the first control is performed on the stylus scanning and code marking of the touch panel, to reduce the power consumption of the electronic device. For example, the stylus scanning and code marking of the touch panel may be disabled, the voltage amplitude of the stylus scanning and code marking may be reduced, or a scanning frame rate of the stylus scanning and code marking may be reduced.

312: If the stylus is not still, the electronic device performs second control on the stylus scanning and code marking.

The performing second control on the stylus scanning and code marking is to ensure a normal operation of a stylus touch.

In an embodiment of this application, the performing second control on the stylus scanning and code marking of the touch panel includes: enabling the stylus scanning and code marking; increasing the voltage amplitude of the stylus scanning and code marking; or increasing the scanning frame rate of the stylus scanning and code marking.

When the stylus establishes a communication connection to the electronic device, the stylus is not attached to the electronic device, the signal strength between the stylus and the electronic device is greater than or equal to the preset threshold, and the stylus is not still, it may be determined that the user needs to use the stylus, and the second control is performed on the stylus scanning and code marking of the touch panel, to ensure normal use of the stylus. For example, the stylus scanning and code marking of the touch panel may be enabled, the voltage amplitude of the stylus scanning and code marking may be increased, or the scanning frame rate of the stylus scanning and code marking may be increased.

According to the touch panel control method provided in this embodiment of this application, the electronic device can control the touch panel based on opening and closing information of the panel protective case of the electronic device and status information of the stylus (which includes the connection status information between the stylus and the electronic device, the attachment status information of the stylus, the signal strength information between the stylus and the electronic device, and the motion status information of the stylus) based on an actual use scenario, to reduce the power consumption of the electronic device and prolong use duration of the electronic device. According to the touch panel control method provided in this embodiment of this application, the electronic device enables the stylus scanning and code marking when a plurality of conditions are met (for example, the stylus establishes a communication connection to the electronic device, the stylus is not attached to the electronic device, the signal strength between the stylus and the electronic device is greater than or equal to the preset threshold, and the stylus is not still), so that a finger touch failure caused by entering a pen mode by mistake due to external interference can be avoided.

It should be noted that, based on different requirements, in the touch panel control method provided in this embodiment of this application, an execution sequence of steps may be changed, some steps may be omitted, and some steps may be changed.

In this embodiment shown in FIG. 3A and FIG. 3B, when control is performed on the stylus scanning and code marking, it is sequentially determined whether the stylus establishes a communication connection to the electronic device, whether the stylus is attached to the electronic device, whether the signal strength between the stylus and the electronic device is less than the preset threshold, and whether the stylus is still. In another embodiment of this application, a determining sequence may be adjusted. For example, it may be sequentially determined whether the stylus establishes a communication connection to the electronic device, whether the signal strength between the stylus and the electronic device is less than the preset threshold, whether the stylus is still, and whether the stylus is attached to the electronic device.

When the control is performed on the stylus scanning and code marking, more or less stylus status information may be used to determine a stylus status more or less. In this embodiment shown in FIG. 3A and FIG. 3B, the stylus status information that is used includes the connection status information between the stylus and the electronic device, the attachment status information of the stylus, the signal strength information between the stylus and the electronic device, and the motion status information of the stylus. It is determined whether the stylus establishes a communication connection to the electronic device, whether the stylus is attached to the electronic device, whether the signal strength between the stylus and the electronic device is less than the preset threshold, and whether the stylus is still. When the stylus establishes a communication connection to the electronic device, the stylus is not attached to the electronic device, the signal strength between the stylus and the electronic device is greater than or equal to the preset threshold, and the stylus is not still, the stylus scanning and code marking is enabled. When any one of the conditions is not met, the stylus scanning and code marking is disabled. In another embodiment of this application, the stylus status information that is used may include the connection status information between the stylus and the electronic device, and the attachment status information of the stylus. It is determined whether the stylus establishes a communication connection to the electronic device, and whether the stylus is attached to the electronic device. When the stylus establishes a communication connection to the electronic device, and the stylus is not attached to the electronic device, the stylus scanning and code marking is enabled. When any one of the conditions is not met, the stylus scanning and code marking is disabled.

In this embodiment shown in FIG. 3A and FIG. 3B, the electronic device controls the touch panel based on the opening and closing of the panel protective case and the stylus status. In another embodiment of this application, the electronic device may control the touch panel only based on the opening and closing of the panel protective case, or control the touch panel only based on the stylus status.

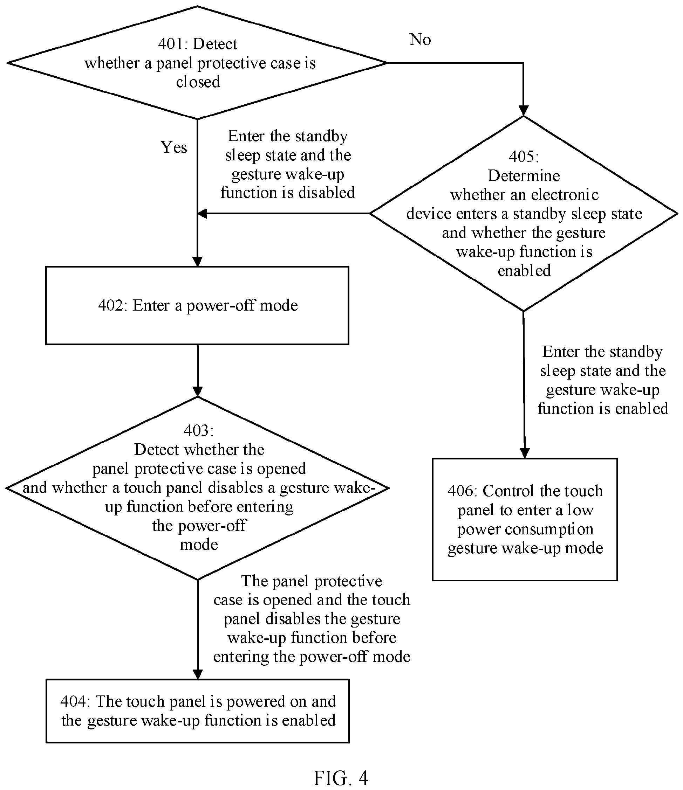

FIG. 4 is a flowchart of a touch panel control method according to another embodiment of this application. In FIG. 4, a touch panel is controlled based on opening and closing of a panel protective case, but the touch panel is not controlled based on a stylus status.

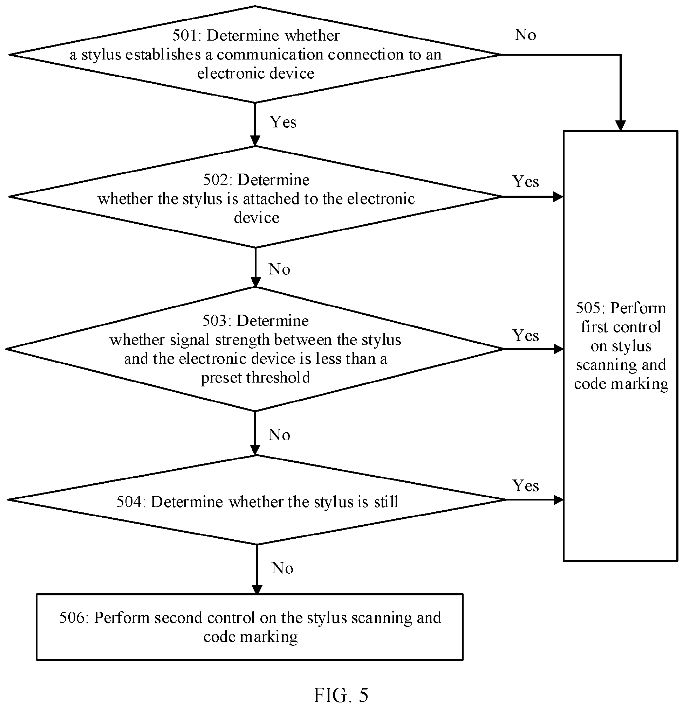

FIG. 5 is a flowchart of a touch panel control method according to another embodiment of this application. In FIG. 5, a touch panel is controlled based on a stylus status, but the touch panel is not controlled based on opening and closing of a panel protective case.

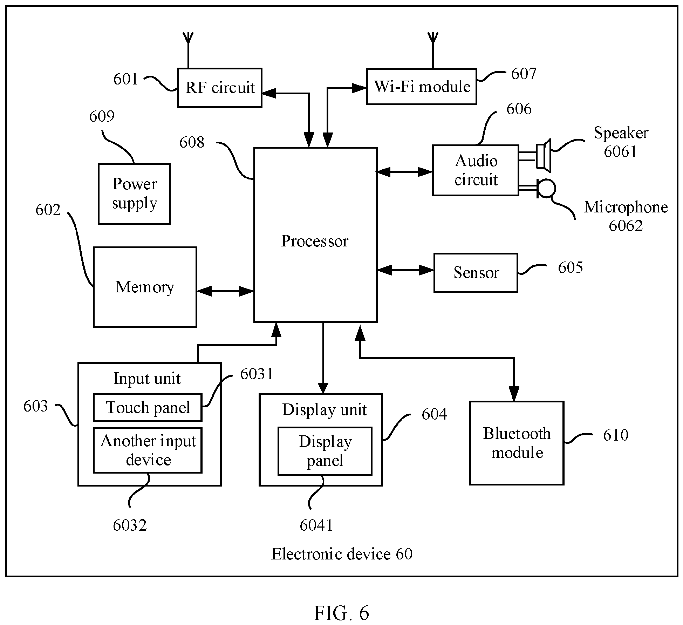

FIG. 6 is a schematic diagram of a structure of an electronic device disclosed in an embodiment of this application. As shown in FIG. 6, the electronic device 60 may include components such as a radio frequency (Radio Frequency, RF) circuit 601, a memory 602, an input unit 603, a display unit 604, a sensor 605, an audio circuit 606, a Wi-Fi module 607, a processor 608, a power supply 609, and a Bluetooth module 610. A person skilled in the art may understand that the structure shown in FIG. 6 does not constitute a limitation on the electronic device, and may include more or fewer components than those shown in the figure, or some components may be combined, or a different component layout may be used.

The RF circuit 601 may be configured to receive and send signals during information receiving and sending or during a call. In particular, after receiving downlink information of a base station, the RF circuit sends the downlink information to the processor 608 for processing, and further sends related uplink data to the base station. Generally, the RF circuit 601 includes but is not limited to an antenna, at least one amplifier, a transceiver, a coupler, a low noise amplifier (Low Noise Amplifier, LNA), a duplexer, and the like.

The memory 602 may be configured to store a software program and a module. The processor 608 performs various function applications of the electronic device and data processing by running the software program and the module that are stored in the memory 602. The memory 602 may mainly include a program storage area and a data storage area. The program storage area may store an operating system, an application required by at least one function (such as a sound playing function or an image playing function), and the like. The data storage area may store data (such as audio data or a phone book) created based on use of the electronic device, and the like. In addition, the memory 602 may include a high-speed random access memory, or may include a nonvolatile memory such as at least one magnetic disk storage device, a flash memory, or another volatile solid-state storage device.

The input unit 603 may be configured to receive input digital or character information, and generate key signal input related to a user setting and function control on the electronic device. Specifically, the input unit 603 may include a touch panel 6031 and another input device 6032. The touch panel 6031, also referred to as a touchscreen, may collect a touch operation of a user on or near the touch panel 6031 (for example, an operation of the user on or near the touch panel 6031 by using any suitable object or accessory, for example, a finger or a stylus), and drive a corresponding connection apparatus according to a preset program. Optionally, the touch panel 6031 may include two parts: a touch detection apparatus and a touch controller. The touch detection apparatus detects a touch location of the user, detects a signal along with a touch operation, and transfers the signal to the touch controller. The touch controller receives touch information from the touch detection apparatus, converts the touch information into touch point coordinates, sends the touch point coordinates to the processor 608, and receives and executes a command sent by the processor 608. In addition, the touch panel 6031 may be implemented by using a plurality of types, such as a resistive type, a capacitive type, an infrared ray type, and a surface acoustic wave type. In addition to the touch panel 6031, the input unit 603 may further include the another input device 6032. Specifically, the another input device 6032 may include, but is not limited to, one or more of a physical keyboard, a functional key (for example, a volume control key or an on/off key), a trackball, a mouse, and a joystick.

The display unit 604 may be configured to display information input by the user or information provided for the user, and various menus of the electronic device. The display unit 604 may include a display panel 6041. Optionally, the display panel 6041 may be configured in a form of a liquid crystal display (Liquid Crystal Display, LCD), an organic light-emitting diode (Organic Light-Emitting Diode, OLED), or the like. Further, the touch panel 6031 may cover the display panel 6041. After detecting a touch operation on or near the touch panel 6031, the touch panel 6031 transfers the touch operation to the processor 608, to determine a type of a touch event. Subsequently, the processor 608 provides corresponding visual output in the display panel 6041 based on the type of the touch event. In FIG. 6, the touch panel 6031 and the display panel 6041 serve as two independent components to implement input and output functions of the electronic device. However, in some embodiments, the touch panel 6031 and the display panel 6041 may be integrated to implement the input and output functions of the electronic device.

The electronic device may further include at least one type of sensor 605, for example, a light sensor, a motion sensor, and another sensor. Specifically, the light sensor may include an ambient light sensor and a proximity sensor. The ambient light sensor may adjust luminance of the display panel 6041 based on brightness of ambient light. The proximity sensor may power off the display panel 6041 and/or backlight when the electronic device moves to an ear. As a type of motion sensor, an accelerometer sensor may detect magnitudes of accelerations in various directions (typically three axes), and detect a magnitude and a direction of gravity in a still state, and may be used to electronic device posture recognition applications (such as landscape/portrait switching, related gaming, and magnetometer posture calibration), and vibration recognition-related functions (such as a pedometer or knock recognition), and the like. For other sensors such as a gyroscope, a barometer, a hygrometer, a thermometer, and an infrared sensor that can also be configured in the electronic device, details are not described herein.

The audio circuit 606, a speaker 6061, and a microphone 6062 may provide an audio interface between the user and the electronic device. The audio circuit 606 may convert received audio data into an electrical signal, and then transmit the electrical signal to the speaker 6061, and the speaker 6061 converts the electrical signal into a sound signal for output. In addition, the microphone 6062 converts a collected sound signal into an electrical signal that is received and converted into audio data by the audio circuit 606. The audio data is then output to the processor 608 for processing, and is sent to another electronic device through the RF circuit 601; or is then output to the memory 602 for further processing.

Wi-Fi belongs to a short-distance wireless transmission technology. The electronic device may help, by using the Wi-Fi module 607, the user receive and send an email, browse a web page, access streaming media, and the like. The Wi-Fi provides wireless broadband internet access for the user. Although FIG. 6 shows the Wi-Fi module 607, it may be understood that the Wi-Fi module 607 is not a mandatory component of the electronic device, and may be omitted as required without changing the essence of the present invention.

The processor 608 is a control center of the electronic device, is connected to all parts of the entire electronic device by using various interfaces and lines, and performs various functions of the electronic device and data processing by running or executing a software program and/or a module stored in the memory 602 and invoking data stored in the memory 602, to perform overall monitoring on the electronic device.

The processor 608 may include one or more processing units. For example, the processor 608 may include an application processor (application processor, AP), a micro control unit (Micro Control Unit, MCU), a modem processor, a graphics processing unit (graphics processing unit, GPU), an image signal processor (image signal processor, ISP), a controller, a video codec, a digital signal processor (digital signal processor, DSP), a baseband processor, and/or a neural-network processor (neural-network processing unit, NPU). Different processing units may be independent components, or may be integrated into one or more processors.

An application processor and a modem may be integrated into the processor 608. The application processor mainly processes an operating system, a user interface, an application, and the like. The modem mainly processes wireless communication. It may be understood that the modem processor may not be integrated into the processor 608.

The electronic device further includes the power supply 609 (for example, a battery) that supplies power to each component. Optionally, the power supply may be logically connected to the processor 608 by using a power management system, to implement functions such as charging management, discharging management, and power consumption management by using the power management system.

The Bluetooth module 610 is a Bluetooth chip, and the Bluetooth module 610 communicates, by using a Bluetooth protocol, with another electronic device having a Bluetooth function.

Although not shown, the electronic device 60 may further include a camera and the like. Details are not described herein. The electronic device described in FIG. 6 may be configured to implement some or all procedures in the method embodiments described in this application. For details, refer to related descriptions in the foregoing embodiments. Details are not described herein again.

This embodiment further provides a computer storage medium. The computer storage medium stores computer instructions. When the computer instructions are run on an electronic device, the electronic device is enabled to perform the related method steps to implement the touch panel control method in the foregoing embodiments.

This embodiment further provides a computer program product. When the computer program product is run on an electronic device, the electronic device is enabled to perform the related steps to implement the touch panel control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the touch panel control method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein.

The foregoing descriptions of implementations allow a person skilled in the art to clearly understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the apparatus embodiments described above are merely examples. For example, division into the modules or units is merely logical function division, and may be other division in an actual implementation. For example, a plurality of units or assemblies may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A touch panel control method, applied to an electronic device, wherein the method comprises:
detecting whether a panel protective case of the electronic device is closed; and
controlling a touch panel of the electronic device to enter a power-off mode in response to detecting that the panel protective case is closed, wherein when it is detected that the panel protective case of the electronic device is closed, a gesture wake-up function of the electronic device has been enabled.

2. The touch panel control method according to claim 1, wherein before the controlling a touch panel to enter a power-off mode, the method further comprises:
disabling the gesture wake-up function in response to detecting that the panel protective case is closed.

3. The touch panel control method according to claim 2, wherein after the controlling a touch panel to enter a power-off mode, the method further comprises:
if it is detected that the panel protective case is opened and it is determined that the touch panel disables the gesture wake-up function before entering the power-off mode, powering on the touch panel and enabling the gesture wake-up function.

4. The touch panel control method according to any one of claims 1 to 3, wherein the method further comprises:
obtaining stylus status information of the electronic device; and
controlling stylus scanning and code marking of the touch panel based on the stylus status information.

5. The touch panel control method according to claim 4, wherein the stylus status information comprises any one or more of the following: connection status information between a stylus and the electronic device, attachment status information of the stylus, signal strength information between the stylus and the electronic device, and motion status information of the stylus.

6. The touch panel control method according to claim 5, wherein the controlling stylus scanning and code marking of the touch panel based on the stylus status information comprises:
performing first control on the stylus scanning and code marking of the touch panel if it is determined, based on the connection status information between the stylus and the electronic device, that the stylus does not establish a communication connection to the electronic device, if it is determined, based on the attachment status information of the stylus, that the stylus is attached to the electronic device, if it is determined, based on the signal strength information between the stylus and the electronic device, that a signal strength between the stylus and the electronic device is less than a preset threshold, or if it is determined, based on the motion status information of the stylus, that the stylus is still.

7. The touch panel control method according to claim 5, wherein the controlling stylus scanning and code marking of the touch panel based on the stylus status information comprises:
performing second control on the stylus scanning and code marking if at least two conditions are met: if it is determined, based on the connection status information between the stylus and the electronic device, that the stylus establishes a communication connection to the electronic device, if it is determined, based on the attachment status information of the stylus, that the stylus is not attached to the electronic device, if it is determined, based on the signal strength information between the stylus and the electronic device, that a signal strength between the stylus and the electronic device is greater than or equal to a preset threshold, and if it is determined, based on the motion status information of the stylus, that the stylus is not still.

8. The touch panel control method according to claim 6, wherein the performing first control on the stylus scanning and code marking of the touch panel comprises:
disabling the stylus scanning and code marking;
reducing a voltage amplitude of the stylus scanning and code marking; or
reducing a scanning frame rate of the stylus scanning and code marking.

9. The touch panel control method according to claim 7, wherein the performing second control on the stylus scanning and code marking comprises:
enabling the stylus scanning and code marking;
increasing a voltage amplitude of the stylus scanning and code marking; or
increasing a scanning frame rate of the stylus scanning and code marking.

10. A touch panel control method, applied to an electronic device, wherein the method comprises:
obtaining stylus status information of the electronic device; and
controlling stylus scanning and code marking of a touch panel of the electronic device based on the stylus status information.

11. The touch panel control method according to claim 10, wherein the stylus status information comprises any one or more of the following: connection status information between a stylus and the electronic device, attachment status information of the stylus, signal strength information between the stylus and the electronic device, and motion status information of the stylus.

12. The touch panel control method according to claim 11, wherein the controlling stylus scanning and code marking of a touch panel based on the stylus status information comprises:
performing first control on the stylus scanning and code marking of the touch panel if it is determined, based on the connection status information between the stylus and the electronic device, that the stylus does not establish a communication connection to the electronic device, if it is determined, based on the attachment status information of the stylus, that the stylus is attached to the electronic device, if it is determined, based on the signal strength information between the stylus and the electronic device, that a signal strength between the stylus and the electronic device is less than a preset threshold, or if it is determined, based on the motion status information of the stylus, that the stylus is still.

13. The touch panel control method according to claim 11, wherein the controlling stylus scanning and code marking of a touch panel based on the stylus status information comprises:
performing second control on the stylus scanning and code marking if at least two conditions are met: if it is determined, based on the connection status information between the stylus and the electronic device, that the stylus establishes a communication connection to the electronic device, if it is determined, based on the attachment status information of the stylus, that the stylus is not attached to the electronic device, if it is determined, based on the signal strength information between the stylus and the electronic device, that a signal strength between the stylus and the electronic device is greater than or equal to a preset threshold, and if it is determined, based on the motion status information of the stylus, that the stylus is not still.

14. The touch panel control method according to claim 12, wherein the performing first control on the stylus scanning and code marking of the touch panel comprises:
disabling the stylus scanning and code marking;
reducing a voltage amplitude of the stylus scanning and code marking; or
reducing a scanning frame rate of the stylus scanning and code marking.

15. The touch panel control method according to claim 13, wherein the performing second control on the stylus scanning and code marking comprises:
enabling the stylus scanning and code marking;
increasing a voltage amplitude of the stylus scanning and code marking; or
increasing a scanning frame rate of the stylus scanning and code marking.

16. A computer-readable storage medium, comprising computer instructions, wherein when the computer instructions are run on an electronic device, the electronic device is enabled to perform the touch panel control method according to any one of claims 1 to 15.

17. An electronic device, wherein the electronic device comprises a processor and a memory, the memory is configured to store instructions, and the processor is configured to invoke the instructions in the memory, to enable the electronic device to perform the touch panel control method according to any one of claims 1 to 15.

18. A chip system, wherein the chip system is used in an electronic device; the chip system comprises an interface circuit and a processor; the interface circuit and the processor are interconnected by using a line; the interface circuit is configured to: receive a signal from a memory of the electronic device, and send the signal to the processor; the signal comprises computer instructions stored in the memory; and when the processor executes the computer instructions, the chip system performs the touch panel control method according to any one of claims 1 to 15.
